# EUROPEAN PATENT APPLICATION

(11) **EP 3 042 811 A1**
(43) Date of publication of application: **13.07.2016**
(21) Application number: 16150420.4
(22) Date of filing: 07.01.2016
(51) Int. Cl.: B60S 3/04, F15B 13/08, F16K 27/00

(54) **DOSING AND DISTRIBUTING MODULAR PANEL FOR VEHICLE WASHING PLANTS**

(30) Priority: 08.01.2015 ES 201530016
(71) Applicant: Istobal S.A., 46250 L'Alcúdia (Valencia) (ES)
(72) Inventor: TOMAS PUCHADES, Yolanda, 46250 LA ALCUDIA (Valencia) (ES)
(74) Representative: Ungria López, Javier

(57) **Abstract**

A dosing and distributing modular panel for vehicle washing plants comprising a first collector (1) and a second collector (2) that are connected to each other via several longitudinal ducts, where in at least one of them a valvular device that allows or blocks the passage of the fluid circulating between both collectors (1), (2) is arranged. The liquid fluid inlet is located in one of the collectors and the liquid fluid outlet is located in the other similar collector; the fluid inlet and outlet being carried out via a number of holes located in the walls of said collectors. In at least one of the collectors, several independent compartments are made up in the inside thereof, in which at least one end of one of the longitudinal ducts converges.

## Description

### OBJECT OF THE INVENTION

The present invention, as stated in the title of this specification, relates to a dosing and distributing modular panel for vehicle washing plants that enables the function of collector/distributor or distributor/collector depending on the requirements and which is compact in order to prevent the risk of leakage.

### BACKGROUND OF THE INVENTION

Currently, the distribution panels that are used in the washing machines have the function of collector/distributor as described in the patent with publication number US 20130160865 A1 and the utility model with publication number ES 1068601.

A first way of working of a distribution panel is when the water that enters a collector is distributed in different circuits depending on the electrovalve that is activated. In some cases, said collector is configured based on independent modules that are assembled depending on the requirements of each installation, in each case. In turn, each one of the modules includes a section of the collector, an electrovalve and one or more holes that enable chemical products to be injected, a pressure gauge to be installed or each one of said holes to be used as an independent outlet.

A second way of working of the distribution panel is when the opposite function is used, such that the water originating from different circuits converges in a collector via the actuation of electrovalves. Currently, this type of collector is built based on the different pieces that are joined together, either via a screw thread or gluing. The drawback of this type of joint is that there are a multitude of said joints that may give rise to leaks, as well as having the drawback that a modular configuration cannot be carried out.

Other documents that show distribution panels are patents with publication numbers: US 6260581 B1, US 20010003289 A1, US 20110192433 A1, US 20130037128 A1 and GB 2373320.

### DESCRIPTION OF THE INVENTION

In order to reach the targets and avoid the disadvantages mentioned in the preceding paragraphs, the dosing and distributing modular panel for vehicle washing plants comprises at least one liquid fluid inlet and at least one outlet for the same liquid fluid, at least one valvular device being inserted between the inlet and the outlet of this fluid, which adopts a first position in which it allows the passage of fluid and a second position in which it blocks the passage of fluid.

The panel of the invention further comprises a first collector and a second collector that are connected to each other via several longitudinal ducts, where in at least one of them a valvular device that allows or blocks the passage of the fluid circulating between both collectors is arranged.

The liquid fluid inlet is located in one of the collectors and the liquid fluid outlet is located in the other similar collector; the fluid inlet and outlet being carried out via a number of holes located in the walls of said collectors.

In at least one of the collectors, several independent compartments are made up in the inside thereof, in which at least one end of one of the longitudinal ducts converges.

The independent compartments are separated from each other via fluid-tight devices fixed on the surrounding faces of the inner chambers of the collector where the different independent compartments are made up.

The fluid-tight devices are formed by separating elements fixed on the surrounding faces of the inner chamber of the collectors.

Inside at least one of the longitudinal ducts a non-return valve is mounted, which only allows the circulating fluid to pass in one direction from one collector to another.

The flow of fluid circulating through the inside of at least one of the longitudinal ducts is controlled via a flow controller.

A filter is mounted inside at least one of the longitudinal ducts at the inlet of the valvular device that controls the passage and blocking of the liquid fluid.

At least one of the longitudinal ducts has at least one radial intake in order to be able to inject an additional product in the current of liquid fluid that circulates through the inside of said longitudinal duct.

The panel of the invention comprises a modular structure formed by a succession of independent modules that are joined together thus making up a compact block, where each one of the modules includes at least the longitudinal duct, the ends of which open into hollow portions that make up the inner chambers of the first and second collectors.

Each one of the independent modules comprises a liquid fluid inlet and an outlet for this liquid fluid.

In one embodiment, the fluid-tight devices are placed in the vicinity of the joint between adjacent modules.

For the purpose of helping to make this specification more readily understandable, a set of drawings constituting an integral part of the same has been included below, wherein by way of illustration and not limitation the object of the invention has been represented.

### BRIEF DESCRIPTION OF THE DRAWINGS

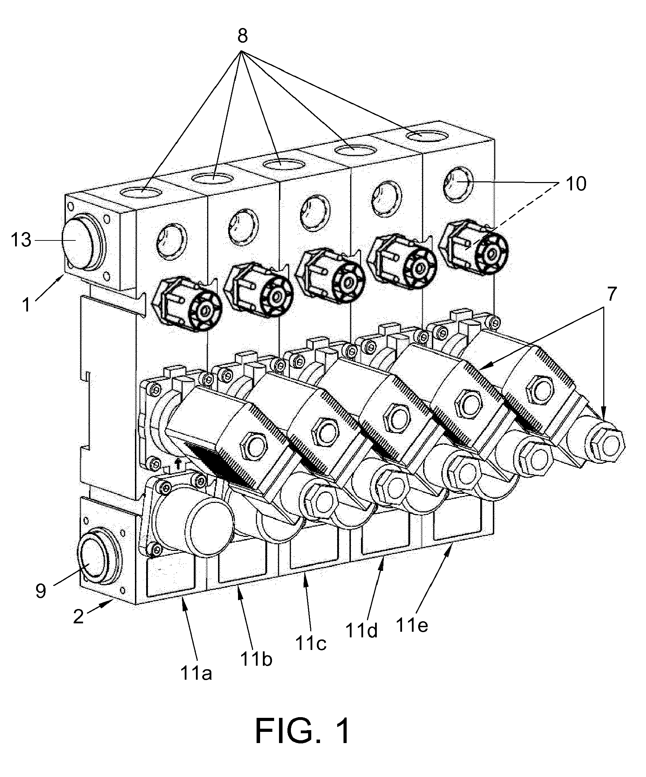

**Figure 1****.-** Shows a perspective view of the modular distribution and dispensing panel for car washing plants, object of the invention.
**Figure 2****.-** Shows a schematic view of the panel of the invention.

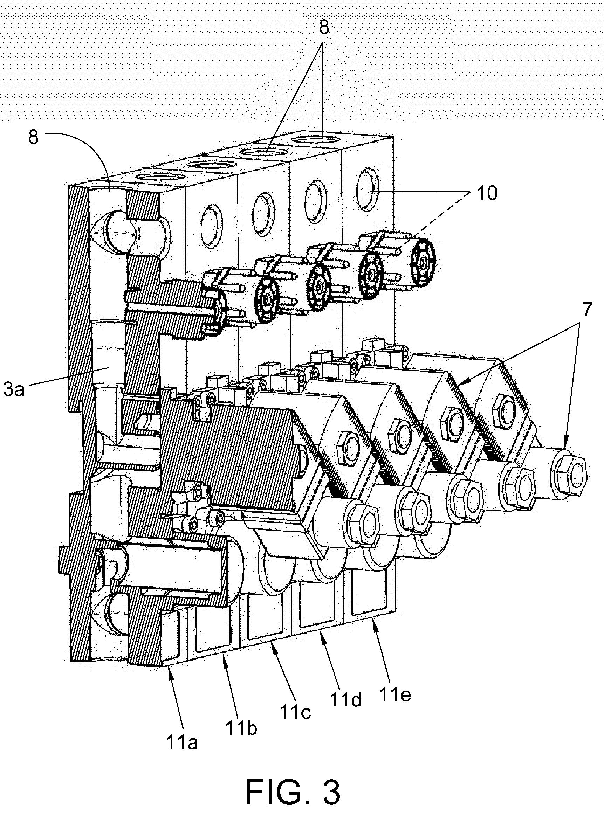

**Figure 3****.-** Shows a cross-sectional perspective view of the modular distribution and dispensing panel of the invention.

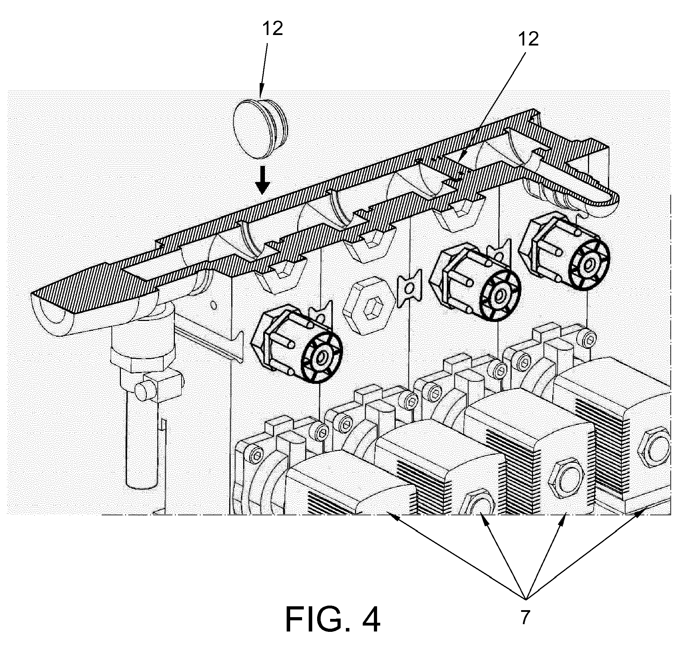

**Figure 4****.-** Shows another cross-sectional perspective view of the panel.

### DESCRIPTION OF A PREFERRED EMBODIMENT OF THE INVENTION

Regarding the numbering adopted in the figures, the dosing and distributing modular panel for vehicle washing plants comprises a first collector (1) and a second collector (2) connected to each other via several longitudinal ducts (3a), (3b), (3c), (3d), (3e) in each one of which is mounted a non-return valve (4) that allows the passage of a liquid fluid in a single direction of circulation, a flow controller (5), a filter (6) to retain the pollutants of the circulating fluid and a valvular device (7) to allow free passage or to block the circulation of the fluid, such that when the passage is free in the respective longitudinal duct, the fluid passes from one collector to the other, passing to the outside through one of the several holes (8), (9) provide in both collectors (1), (2).

The filter (6) is placed at the inlet of the valvular device (7) to prevent the passage of pollutants inside said valvular device (7) in order to prevent the poor operation thereof.

Furthermore, each longitudinal duct has radial intakes (10) in order to be able to inject different additional products, such as wax or detergent for example, with the aim of achieving better vehicle washes.

The panel of the invention comprises a modular structure formed by a succession of independent modules (11 a), (11b), (11c), (11 d), (11e) joined to each other making up a compact block, where each one of the independent modules includes the longitudinal duct, the ends of which open into hollow portions that make up inner chambers of the first (1) and second (2) collectors.

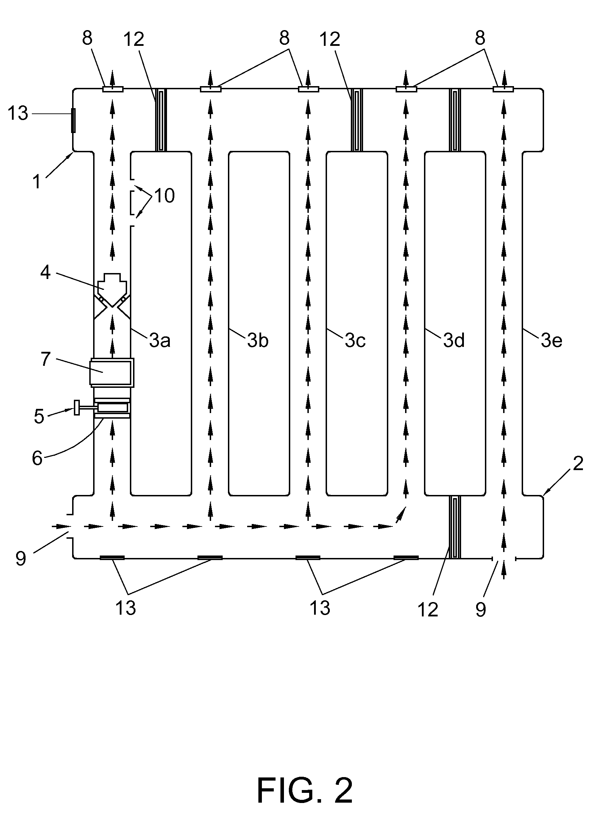

Furthermore, intermediate separation means are provided that are made up of a number of fluid-tight devices comprising separating elements that are fixed inside the chambers of the collectors (1), (2) to create independent compartments into which one or several ends of the longitudinal ducts open, as clearly shown in figure 2, thus achieving a wide range of independent possibilities in the mix of different fluids and products.

In the example shown in figure 2, a first fluid that supplies four longitudinal ducts (3a), (3b), (3c), (3d) and a second fluid that supplies a fifth longitudinal duct (3e) is inserted in the second collector (2) situated in a lower portion, achieving this separation via a separating element (12) placed in the joining area between the fourth (11 d) and fifth (11 e) modules.

The two fluids that supply the second collector (2) pass through the respective longitudinal ducts until they reach the first collector (1) situated in an upper portion, in which four independent compartments are made up separated by other intermediate separating elements (12) arranged so as to correspond with the areas in the joining area between the modules. Specifically, in the first collector (1) a first compartment is made up where the first longitudinal duct (3a) opens into, a second compartment where the second (3b) and third (3d) longitudinal ducts, open into, a third compartment where the fourth longitudinal duct (3d) opens into, and a fourth compartment where the fifth longitudinal duct (3e) opens into.

Clearly, both first (1) and second (2) collectors, have several holes (8), (9) in order to provide supply inlet and usage outlet for the different fluids mixed with the different products, such that the holes that are not used are closed with plugs (13) that are fixed via screw thread or other fixing means.

It must be noted that by using the intermediate separation means linked to the collectors (1), (2), the panel of the invention may be programmed so that it functions with a multitude of possibilities, such that part of the panel may function in the first way of working described in the background section, and another part may function in the second way of working also described in said background section.

## Claims

1. **A dosing and distributing modular panel for vehicle washing plants** comprising at least one liquid fluid inlet and at least one outlet for the same liquid fluid, at least one valvular device being inserted between the inlet and the outlet of this fluid, which adopts a first position in which it allows the passage of fluid and a second position in which it blocks the passage of fluid;
**characterised in that**:
- it comprises a first collector (1) and a second collector (2) that are connected to each other via several longitudinal ducts, where in at least one of them a valvular device that allows or blocks the passage of the fluid circulating between both collectors (1), (2) is arranged;
- the liquid fluid inlet is located in one of the collectors and the liquid fluid outlet is located in the other similar collector; the fluid inlet and outlet being carried out via a number of holes located in the walls of said collectors.
- in at least one of the collectors, several independent compartments are made up in the inside thereof, in which at least one end of one of the longitudinal ducts converges.

2. **The dosing and distributing modular panel for vehicle washing plants,** according to claim 1, **characterised in that** the independent compartments are separated from each other via fluid-tight devices fixed on the surrounding faces of the inner chambers of the collectors where the different independent compartments are made up; the fluid-tight elements comprising separating elements fixed on the surrounding faces of the inner chambers of the collectors (1), (2).

3. **The dosing and distributing modular panel for vehicle washing plants**, according to any one of the preceding claims, **characterised in that** inside at least one of the longitudinal ducts a non-return valve (4) is mounted, which allows the circulating fluid to pass in only one direction from one collector to another.

4. **The dosing and distributing modular panel for vehicle washing plants,** according to any one of the preceding claims, **characterised in that** the flow of fluid circulating through the inside of at least one of the longitudinal ducts is controlled via a flow controller (5).

5. **The dosing and distributing modular panel for vehicle washing plants**, according to any one of the preceding claims, **characterised in that** a filter (6) is mounted inside at least one of the longitudinal ducts at the inlet of the valvular device (7) that controls the passage and blocking of the liquid fluid.

6. **The dosing and distributing modular panel for vehicle washing plants,** according to any one of the preceding claims, **characterised in that** at least one of the longitudinal ducts has at least one radial intake (10) in order to inject an additional product in the current of liquid fluid that circulates through the inside of said longitudinal duct.

7. **The dosing and distributing modular panel for vehicle washing plants**, according to any one of the preceding claims, **characterised in that** it comprises a modular structure formed by a succession of independent modules that are joined together thus making up a compact block, where each one of the modules includes at least the longitudinal duct, the ends of which open into hollow portions that make up the inner chambers of the first (1) and second (2)collectors.

8. **The dosing and distributing modular panel for vehicle washing plants**, according to claims 2 and 9, **characterised in that** the fluid-tight devices are placed in the joining area between adjacent modules.
